# FASCICULE DE BREVET EUROPEEN

(11) **EP 0 750 175 B1**
(45) Date de publication et mention de la délivrance du brevet: **12.12.2001**
(21) Numéro de dépôt: 96401288.4
(22) Date de dépôt: 13.06.1996
(51) Int. Cl.: G01B 11/24, A43D 1/02

(54) **Procédé d'acquisition et de numérisation d'objets au travers d'une paroi transparente et système de mise en oeuvre d'un tel procédé**
Verfahren zur Erfassung und Digitalisierung von Gegenständen durch eine transparente Wand und System zur Durchführung dieses Verfahrens
Acquisition and numerisation method for objects through a transparent wall and system for carrying out this method

(30) Priorité: 23.06.1995 FR 9507591
(43) Date de publication de la demande: 27.12.1996
(73) Titulaire: KREON INDUSTRIE, Société Anonyme, 87022 Limoges Cédex 09 (FR)
(72) Inventeur: Garuet-Lempirou, Jean-Claude, 87100 Limoges (FR)
(74) Mandataire: Thibon-Littaye, Annick

(56) Documents cités:
- EP-A- 0 362 029
- FR-A- 2 642 833
- FR-A- 2 685 764
- US-A- 5 164 793

## Description

L'invention concerne un procédé d'acquisition et de numérisation d'objets au travers d'une paroi transparente, notamment d'une paroi transparente non plane.

L'invention concerne également un système de mise en oeuvre d'un tel procédé.

De nombreux systèmes de capteurs optiques sont connus. Notamment, le brevet français publié sous le numéro FR-B-2 685 764, déposé au nom de la Demanderesse et intitulé "Capteur optique compact et à haute résolution pour l'analyse de formes tridimensionnelles", divulgue un système permettant l'acquisition et la numérisation, en trois dimensions de la forme de pièces gauches. Pour ce faire, le système comporte au moins un capteur optique avec une source de rayonnement laser et une ou plusieurs caméras analysant la trace formée par le faisceau laser sur l'objet à étudier. Le document en question se réfère en particulier au cas d'un système dans lequel un ensemble optique mobile unique comporte un ou plusieurs détecteurs et une ou plusieurs caméras.

Plus précisément, le système connu engendre un "plan laser", c'est-à-dire un faisceau lamellaire sectoral de très faible épaisseur, mais dont la largeur lui permet de couvrir tout ou partie de l'objet à analyser, avec les caméras précitées regardant le plan sous des incidences différentes. Pour effectuer l'acquisition et la numérisation de la surface d'un objet, il est nécessaire de procéder à un balayage de la pièce par le plan laser. On réalise ainsi l'acquisition progressive, dans les trois dimensions, de la surface de la pièce. Le balayage peut être réalisé aussi bien par pivotement que par translation du capteur par rapport à la pièce. On peut également obtenir le balayage en maintenant le capteur fixe et en déplaçant la pièce par rapport à ce dernier.

Ce brevet divulgue également des dispositions propres à miniaturiser la structure de l'ensemble optique, notamment en repliant le faisceau laser. Cette disposition autorise notamment la mise en oeuvre du système dans un espace très restreint, pour des pièces de petites dimensions, avec une grande précision dans un champ réduit.

Ce type de système remplit donc parfaitement les fonctions qui lui sont assignées dans ce contexte.

Cependant, il existe d'autres besoins pour lesquels un tel système n'est pas utilisable de façon pratique. Ce sont toutes les applications pour lesquelles il est nécessaire de travailler au travers d'une paroi transparente, éventuellement non plane. Dans un but de simplification, on peut répartir ces applications en deux familles principales d'applications auxquelles l'invention s'intéresse spécialement.

Dans une première famille d'applications, l'objet doit reposer sur un support permettant une "vision" complète des sections de l'objet, y compris aux limites du support. Cela permet de restituer l'environnement de l'objet en situation réelle.

Comme exemple type, dans cette première famille d'applications, on peut citer la numérisation d'un membre humain et plus particulièrement d'un pied humain de manière à en reconstituer le volume, pour le moins certaines caractéristiques dimensionnelles, par exemple la forme de la plante du pied. A titre d'exemple non limitatif, l'acquisition de la forme complète du pied permet de réaliser des chaussures sur mesure. Dans ce cas, pour mener à bien cette opération d'acquisition et de numérisation, il est souhaitable que le pied numérisé se retrouve dans un environnement aussi proche que possible d'une chaussure. Pour ce faire, le pied est pris dans un bas de maintien pour simuler la pression du cuir de la chaussure. Il repose par ailleurs sur une plaque transparente reproduisant aussi fidèlement que possible la forme de la "première", pièce de cuir sur laquelle repose le pied dans une chaussure. Elle est réalisée à base d'une plaque de verre ou en matériau similaire. Cette disposition permet de simuler, d'aussi près que possible, un appui réel d'un pied dans une chaussure.

La seconde catégorie d'applications concerne des objets qui se déforment sous l'effet de contraintes physiques. A titre d'exemple, on va considérer le cas d'un joint de voiture en caoutchouc. Celui-ci va se déformer lors de la fermeture de la portière. C'est son profil, une fois déformé sous la contrainte de la portière, qui va assurer ou non une bonne étanchéité au véhicule. Habituellement, le profil optimisé est calculé en ayant recours à la Conception Assistée par Ordinateur ou "CAO". Des profils théoriques sont calculés, puis une simulation informatique des contraintes appliquées au joint est effectuée, en faisant appel à des logiciels de modélisation par éléments finis. Ceci permet de visualiser les déformations prévisibles. Naturellement, il est nécessaire ensuite de construire un prototype du joint et de valider les calculs de CAO, c'est-à-dire de le tester en situation réelle. Pour ce faire, il est nécessaire d' "appréhender" au mieux la forme du joint compressé, c'est-à-dire dans l'état "véhicule porte fermée". On conçoit aisément que ce test est difficile à mener à bien puisqu'il implique une numérisation "en réel" de la déformation du joint et de la visualiser.

Pour ce faire, on réalise une portière de référence en matériau transparent. On peut donc numériser, en continu, le joint écrasé par la portière de référence au travers de celle-ci, puisqu'elle est constituée d'une paroi ou plaque transparente.

Une fois acquises les données caractérisant le profil numérisé, il est alors possible de réinjecter ces données en CAO, sous forme appropriée, et de les comparer aux données théoriques calculées. En cas de divergences dépassant des limites préétablies, les étapes précédentes peuvent être réitérées jusqu'à l'obtention d'un résultat satisfaisant.

On conçoit aisément que cette possibilité présente des avantages commerciaux et financiers importants pour le constructeur automobile concerné.

Cependant, ces deux familles d'applications posent problème. En effet, le système, optique de numérisation conforme à la demande de brevet précitée génère un faisceau laser qui va être déformé par la traversée de la paroi transparente, phénomène encore aggravé lorsqu'il y a non-planéité. Il en sera de même des rayons réfléchis et captés par la ou les caméra(s) associée(s) au capteur optique. Or, il est nécessaire d'effectuer une corrélation entre les points "vus" par la ou les caméra(s) et un référentiel absolu de manière à reconstruire le volume de l'objet et d'en déduire sa forme exacte, c'est-à-dire exempte de déformations.

L'invention vise à apporter une solution à ce premier besoin.

Il existe une autre limitation liée à l'utilisation d'un système selon la demande précitée. En effet, avec un seul capteur qui serait fixe, il n'est pas possible d'extraire une section complète d'un objet en trois dimensions. C'est le cas du pied humain précité.

On peut naturellement penser faire effectuer un tour complet au capteur autour de l'objet. Cependant cette solution présente des inconvénients. De façon pratique, il est nécessaire de mettre en oeuvre un dispositif mécanique très lourd. D'autre part, le capteur est relié, au moins par un câble, à des organes de commande et d'exploitation des signaux représentant les grandeurs acquises et numérisées : par exemple un ensemble classique de traitement numérique de signal, de mémorisation et de visualisation. On ne peut donc indéfiniment tourner autour de l'objet. Il est nécessaire d'effectuer l'opération inverse de retour à l'état initial ou état de repos. Pendant cette opération, il faut donc "dénouer" le câble de liaison, ce qui peut s'avérer délicat. Dans tous les cas, le système manque de souplesse.

Pour pallier cet inconvénient, on peut penser mettre en oeuvre un contact tournant. Ce dispositif augmente le prix de revient de l'appareil et diminue sensiblement la fiabilité du fonctionnement. Il en est de même pour les applications pour lesquelles l'objet à numériser ne peut rester longtemps immobile (plus d'une vingtaine de secondes). C'est de nouveau le cas lorsque l'on désire effectuer l'acquisition de la section d'un membre d'une personne, tel qu'un pied.

Il est donc nécessaire de procéder rapidement ce qui exclut les acquisitions en plusieurs passes de numérisation.

Dans le cas de mesures effectuées sur des membres vivants, on peut estimer gue l'objet à mesurer est relativement mou et que le délai de saisie, pour être acceptable, ne doit pas dépasser un intervalle de temps de l'ordre d'une quinzaine de secondes. Il doit être en outre bien clair que la saisie en question concerne, non pas une, mais plusieurs sections constituant des tranches successives.

Aussi, dans une variante de réalisation préférée de l'invention, il est prévu d'entourer l'objet à étudier par plusieurs capteurs pour constituer des sections complètes de celle-ci en un seul passage, c'est-à-dire :
- générer, par plusieurs capteurs, un plan laser unique entourant complètement la pièce, de manière que les caméras associées aux capteurs ne soient pas amenées à voir différents plans laser émis par différents capteurs dans les zones de recouvrement ;
- procéder aux relevés vus par chaque capteur, de manière synchronisée, afin d'obtenir des portions de sections homogènes, prises dans un même plan pour tous les capteurs lors de chaque relevé ;
- et regrouper les différentes données obtenues à partir des différentes caméras dans un référentiel absolu unique, pour obtenir à partir de chaque plan de mesure l'image tridimensionnelle recherchée.

L'invention vise, tout à la fois, à pallier les inconvénients des dispositifs de l'Art Connu, dont certains viennent d'être rappelés, et à satisfaire les besoins qui se font sentir.

Pour ses formes de mise en oeuvre préférées, l'invention a donc pour objet un procédé d'acquisition et de numérisation à l'aide d'au moins un.capteur comprenant au moins une source laser générant, vers ledit objet, un faisceau lamellaire formant un plan laser de mesure et au moins une caméra observant cet objet, le capteur étant fixé à un porte-capteurs mobile, suivant lequel ledit objet est observé au travers d'une plaque transparente d'épaisseur constante et dotée d'un profil susceptible d'être balayé en permanence par un plan laser orthogonal à l'une des surfaces de cette plaque, suivant un axe déterminé, et le procédé comprend au moins les phases suivantes :
- une phase préliminaire comprenant au moins les étapes suivantes :
   a/ définition d'un espace de mesure englobant ledit objet à acquérir et à numériser ;
   b/ numérisation de ladite paroi afin d'en déterminer les caractéristiques géométriques par rapport à un référentiel ;
   c/ définition d'une cinématique de déplacement selon ledit axe déterminé, en inclinant le capteur par rapport à cet axe de telle sorte que le plan laser issu de ce capteur reste en permanence perpendiculaire à la surface de ladite paroi transparente, et étalonnage de la totalité dudit espace de mesure à l'aide d'une mire d'étalonnage se déplaçant perpendiculairement à la paroi suivant cet axe déterminé ;
   d/ transformation des données de coordonnées ainsi acquises et numérisées dans un référentiel absolu, et mémorisation de celles-ci ;
- et une phase d'acquisition et de numérisation dudit objet comprenant au moins les étapes suivantes :
   a/ déplacement dudit porte-capteurs suivant ledit axe déterminé conformément à ladite cinématique de déplacement de manière que ledit plan laser de mesure reste perpendiculaire à ladite paroi ;
   b/ acquisition et numérisation, par tranches successives, de tout ou partie de sections de l'objet ;
   c/ transformation des données de coordonnées ainsi acquises dans un référentiel absolu par corrélation avec lesdites données issues de l'étalonnage de l'espace de mesure et mémorisées.

Selon le mode de réalisation préféré de l'invention, ledit plan laser de mesure étant la combinaison de plans laser particuliers créés par plusieurs capteurs optiques fixés audit porte-capteurs et entourant complètement ledit objet, il est procédé, pendant ladite phase préliminaire, à une étape supplémentaire consistant au réglage de la coplanéité des plans lasers individuels émis par ces lasers, de manière à former un plan laser de mesure unique.

L'invention a encore pour objet un système pour la mise en oeuvre de ce procédé.

L'invention a encore pour objet l'application à la numérisation d'un pied humain, notamment pour la réalisation de chaussures sur mesure.

L'invention a encore pour objet l'application la numérisation d'un joint compressible soumis à des contraintes, notamment pour un véhicule automobile.

L'invention sera mieux comprise et d'autres caractéristiques et avantages apparaîtront à la lecture de la description qui suit en référence aux figures annexées, et parmi lesquelles :
- La figure 1 illustre schématiquement un système d'acquisition et de numérisation de sections d'un pied humain ;
- La figure 2 illustre la phase d'étalonnage d'un tel système ;
- La figure 3 met en évidence les problèmes liés à la réfraction au travers d'une paroi non plane ;
- Les figures 4a et 4b illustrent le comportement d'un joint d'étanchéité en caoutchouc, pour portière automobile, au repos (portière ouverte) et déformé (portière fermée), respectivement ;
- Les figures 5a et 5b illustrent schématiquement un système d'acquisition et de numérisation permettant de suivre la déformation de ce joint lorsqu'il est soumis à des contraintes de pression.

On va tout d'abord considérer un exemple d'application de l'invention dans la première famille d'applications précitée.

Dans ce qui suit, pour fixer les idées et sans que cela soit limitatif en quoi que ce soit de la portée de l'invention, on va se placer dans le cas de l'acquisition et la numérisation d'un pied humain. De même, on va se placer dans le cadre d'un mode de réalisation préféré du système selon l'invention, à savoir un système multicapteur.

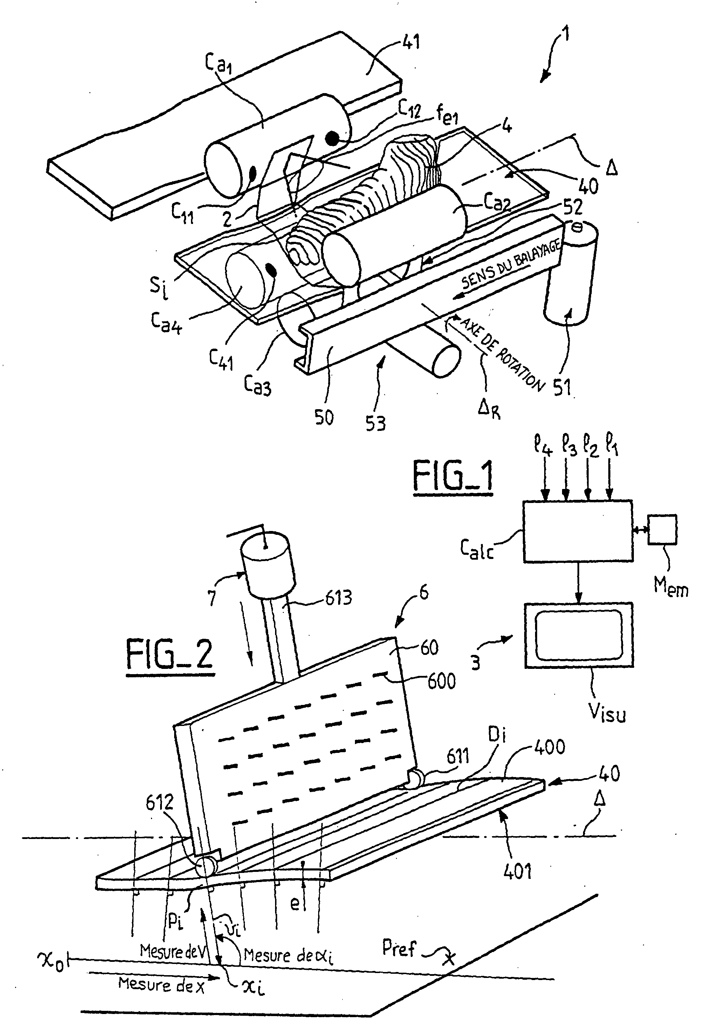

La figure 1 illustre un système 1 d'acquisition et de numérisation de sections d'objets au travers d'une paroi transparente non plane permettant cette opération.

On suppose que le système comporte quatre capteurs optiques, Cₐ₁ à Cₐ₄.

Chacun des capteurs optiques peut être semblable, voire identique, au capteur décrit dans le brevet français FR-B-2 685 764 précité, auquel on se reportera avec profit pour une description plus détaillée de ces capteurs. Un tel capteur comprend essentiellement une source laser (non représentée), générant des faisceaux lamellaires, par exemple le faisceau f₂₁. Les sources laser sont avantageusement constituées par des diodes laser semi-conductrices.

Selon une caractéristique importante de l'invention, lorsque le système est multicapteur, les quatre plans laser des faisceaux lamellaires et plus généralement les N plans laser des faisceaux lamellaires générés sont coplanaires.

Chaque capteur, Cₐ₁ à Cₐ₄, est en outre: muni d'au moins une caméra, avantageusement de deux caméras, par exemple C₁₁-C₁₂ pour le capteur Cₐ₁, disposées de part et d'autre des sources lasers.

Les quatre capteurs, Cₐ₁ à Cₐ₄, sont rendus solidaires d'un berceau 2, par exemple de forme circulaire, de manière qu'ils entourent l'objet à numériser, en l'occurrence le pied 4.

Les plans lasers des quatre faisceaux étant coplanaires, les caméras observent la même section Sᵢ du pied 4. Les signaux de sortie de ces caméras sont transmis, via des liaisons, l₁ à l₄, à un ensemble de traitement de signal 3 qui permet l'acquisition et la numérisation effectives. Pour ce faire, les signaux en provenance de caméras sont tout d'abord convertis, de façon classique, en signaux numériques, s'il s'agit de caméras de type analogique. Cette conversion peut s'effectuer à l'intérieur de l'enceinte physique des capteurs, Cₐ₁ à Cₐ₄. Il existe également des caméras entièrement numériques qui fournissent directement des signaux de sortie numériques représentatifs de l'image captée. A partir de ces signaux, l'acquisition et la numérisation de la section peuvent être effectués par l'ensemble de traitement de signal 3. Celui-ci peut comprendre avantageusement des organes de calcul C_{alc}, à programme enregistré. Ceux-ci sont munis de cartes d'interface appropriées (non représentées) permettant la communication avec les caméras, par exemple C₁₁-C₁₂. Les liaisons sont généralement de type bidirectionnelles ou comprennent des paires de liaisons monodirectionnelles, de façon à transmettre des instructions et commandes aux caméras et aux sources lasers, ainsi qu'aux organes de commande du mouvement du porte-capteurs, et à recevoir les signaux de sorties de ces caméras. Naturellement, il est prévu divers dispositifs classiques, telles que les alimentations en énergie des organes présents dans les capteurs, Cₐ₁ à Cₐ₄.

L'ensemble de traitement de signal 3 comprend également une mémoire, Mₑₘ, de stockage des informations et des programmes de fonctionnement. Celle-ci peut être interne aux organes de calcul C_{alc} ou externe (dans l'exemple illustré). Il comprend enfin un organe de visualisation, Vᵢₛᵤ, par exemple un écran cathodique, et divers autres circuits classiques non représentés : mémoire fixe, etc.

Toutes ces dispositions, en soi, sont classiques et connues de l'Homme de Métier. Il n'est donc pas nécessaire de les redécrire plus avant.

A titre d'exemple non limitatif, on peut mettre en oeuvre la technique d'acquisition enseignée dans le brevet français précité, plus particulièrement en se référant aux figures 7 à 10d de ce brevet et à la description associée.

Cependant, si cette technique convient parfaitement au cas d'un capteur unique, elle ne se suffit pas à elle-même dans le cadre de l'invention qui met en oeuvre plusieurs capteurs dans le mode de réalisation préféré, quatre dans l'exemple décrit.

Il est en effet nécessaire de procéder aux relevés vus par chaque capteur, Cₐ₁ à Cₐ₄, de manière synchronisée, afin d'obtenir des portions de sections Sᵢ homogènes, prises dans un même plan, pour tous les capteurs lors de chaque relevé.

Il est également nécessaire de regrouper ces différentes données obtenues à partir des différentes caméras dans un référentiel absolu unique, que l'on notera (x, y, z), pour obtenir, à partir de chaque plan de mesure, l'image tridimensionnelle recherchée.

On procède pour ce faire à un étalonnage des capteurs dans l'ensemble de l'espace de numérisation, qui sera précisé ci-après.

Le pied à mesurer 4 repose sur un socle 40, constitué par une plaque en matériau transparent. Le second pied (non représenté) peut reposer sur un socle 41, disposé parallèlement au premier pied mais en dehors de l'espace occupé par les capteurs Cₐ₁ à Cₐ₄.

Pour obtenir une image volumique du pied 4, il est nécessaire d'acquérir des sections Sᵢ associées à des coupes successives. Il n'est évidemment pas possible de faire avancer le pied 4 qui doit rester, a priori, immobile sur son socle 40. Ce sont donc les capteurs optiques, Cₐ₁ à Cₐ₄, fixés à leur berceau 2, qui doivent être animés d'un mouvement de translation suivant l'axe Δ, a priori l'axe longitudinal du pied 4.

Pour ce faire, on prévoit un dispositif 5 d'entraînement du système de numérisation 1, et plus précisément d'entraînement du berceau 2. Celui-ci comprend, dans l'exemple décrit, un moteur d'entraînement 51 d'un organe à poulies et engrenages 52, tournant autour d'un axe de rotation Δ_{R}, et un rail rectiligne de guidage 50. Le dispositif d'entraînement 5 oblige le berceau 2, et donc les capteurs, Cₐ₁ à Cₐ₄, qui lui sont liés, à effectuer une translation le long du rail rectiligne de guidage 50, d'amplitude prédéterminée. Il comprend également un second moteur permettant, via l'organe à poulie et l'engrenage 52 de faire pivoter le berceau autour de l'axe de rotation Δ_{R}, pour des raisons qui seront explicitées ci-après. Afin d'assurer un mouvement continu (et donc aussi rapide que possible) pendant la numérisation, la cinématique de déplacement des capteurs est déclenchée. Ceux-ci vont alors se déplacer en continu. Le déplacement ne s'effectue donc pas en mode "pas à pas" sous le contrôle des organes de traitement de données 3, mais en recalculant en continu la position spatiale des capteurs, par exemple en munissant les moteurs de résolveurs et en comptant des "tops" de roues codeuses. Il est alors possible d'associer l'ensemble des portions de section prises par chaque caméra des capteurs aux coordonnées du capteur dans l'espace.

Pendant cette translation, un certain nombre de séries de mesures successives est effectué. A chaque série de mesures est associée une section acquise Sᵢ, correspondant à un plan de coupe. Si le nombre de coupes successives est suffisamment élevé, il devient possible d'acquérir et de reconstituer le volume externe du pied 4' sous forme "filaire" ou, par tout procédé informatique connu, de "lisser" cette reconstitution. Le traitement des différents signaux est effectué par l'ensemble de traitement de signal représenté sous la référence 3, sur la figure 1.

Une fois les données acquises et mémorisées, on conçoit aisément qu'elles peuvent être utilisées, de façon classique, lors de traitements ultérieurs, pour piloter des automates permettant la création des pièces constitutives d'une chaussure, qui sera parfaitement adaptée au pied qui vient d'être mesuré et numérisé.

Cependant, comme il a été indiqué dans le préambule de la présente description, il est tout à fait souhaitable que le pied 4 à mesurer repose sur une surface 40 non plane reproduisant aussi exactement que possible la forme d'une surface interne d'une chaussure. Le ou les faisceaux laser généré(s) par la ou les sources laser associées aux capteurs situés en dessous de la plaque (en l'occurrence les capteurs Cₐ₃ et Cₐ₄) vont être déformés par la traversée de la paroi transparente non plane, c'est-à-dire le support 40 du pied 4. II en sera de même des rayons réfléchis et captés par la ou les caméra(s) associée(s) à ces capteurs, Cₐ₃ et Cₐ₄. Or, il est nécessaire d'effectuer une corrélation entre les points "vus" par les caméras et un référentiel absolu de manière à reconstruire le volume du pied et d'en déduire sa forme exacte, c'est-à-dire exempte de déformations optiques.

Il est donc nécessaire de procéder à une étape d'étalonnage initial pour acquérir les caractéristiques dimensionnelles exactes de la paroi non plane et ainsi être en mesure de transformer les points observés par l'ensemble des caméras, c'est-à-dire des points liés à un référentiel relatif, perturbé en outre par les déformations des faisceaux dues à la non planéité de la paroi 40, en un référentiel absolu.

Cette étape d'étalonnage initial va être décrite dans le cas le plus général. En effet, comme il a été indiqué dans le préambule de la présente description, le procédé de l'invention est parfaitement compatible avec des parois planes, étant entendu que la non-planéité aggrave les problèmes rencontrés.

On peut donc définir de façon générale la paroi transparente comme étant une paroi susceptible d'être balayée en permanence par un plan laser orthogonal à l'une des surfaces de cette paroi. Une autre exigence est que la paroi soit d'épaisseur constante.

Une telle paroi peut être notamment :
- une paroi plane, ce qui constitue un cas particulier ;
- une paroi à surfaces réglées, développées par simple translation à partir d'une courbe continue ;
- une paroi à surface cylindrique ;
- une paroi à surface de révolution, développée à partir d'une courbe régulière par rotation autour d'un même axe ;
- une paroi à surface sphérique, ce qui constitue un cas particulier du cas précédent.

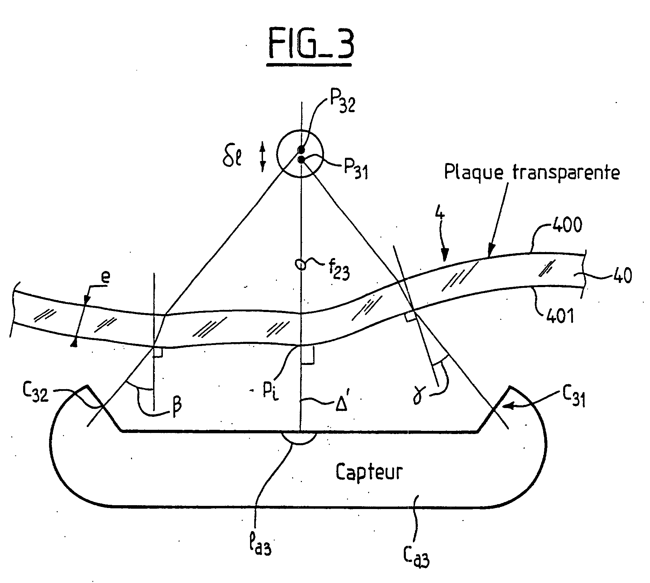

Le processus d'étalonnage de la plaque support comprend plusieurs étapes. Ce processus va être explicité par référence aux figures 2 et 3.

Sur la figure 2, on a représenté une portion de la plaque support 40 en matériau transparent. Pour procéder à l'étalonnage, on utilise une mire 6 constituée d'une plaque 60 supportant des piges 600 réparties de façon régulièrement, selon une organisation matricielle, lignes - colonnes.

Les plans laser, constitués par les faisceaux partiels des capteurs Cₐ₁ à Cₐ₄, par exemple le faisceau fₗ₁, coupent les piges 600, et les caméras (non représentées) de ces capteurs voient une série de points correspondants à ces intersections. On calcule alors des matrices de transformation qui, à un pixel sur chaque caméra de capteur, Cₐ₁ à Cₐ₄, associent un point dans l'espace associé au plan, que forme le porte-capteurs 2, associé à un référentiel (U, V, W) ou espace relatif. La connaissance de la position du berceau 2 porte-capteurs mobile, par rapport à un référentiel "matériel" fixe, référencé (R, S, T), constitué par la mire 60 porte-piges 600, permet ensuite de calculer les coordonnées dans un espace absolu (X,Y,Z).

Le calcul peut s'effectuer conformément à l'enseignement divulgué dans la demande de brevet français FR-A-2 642 833.

Il est décrit un procédé d'étalonnage d'un système d'acquisition de forme possédant un ensemble-capteur mobile, apte à délivrer les coordonnées (x, y, z) représentant la forme partielle d'un objet tridimensionnel dans un référentiel dit absolu (X, Y, Z). Le procédé vise à établir la fonction de transfert globale entre des informations, dites brutes et associées à un référentiel relatif de coordonnées (u, v, w), délivrées par l'ensemble-capteur du système d'acquisition et les coordonnées réelles (x, y, z) de la surface de l'objet en cours d'acquisition. La mire, fixe, est associée à un référentiel de coordonnées (r, s, t). Le passage d'un système de coordonnées à l'autre s'effectue par un calcul matriciel classique.

Naturellement, le système capteur divulgué est monocapteur, contrairement à celui conforme au mode de réalisation préférentiel selon l'invention qui comporte plusieurs capteurs solidaires de l'arceau 2, quatre dans l'exemple décrit. L'ensemble des mesures effectuées par les différents capteurs, Cₐ₁ à Cₐ₄, doit être pris en compte, après synchronisation. C'est cet ensemble de mesures qui définit les coordonnées (u, v, w) du référentiel relatif (U, V, W). Il est naturellement nécessaire qu'il y ait un recouvrement entre les différents faisceaux, sur les piges 600.

En outre, dans le cas de la numérisation au travers d'une surface non plane 40, d'autres paramètres doivent être acquis lors de l'étalonnage initial, du fait précisément de la courbure du support. Il est nécessaire en effet de définir une cinématique continue du déplacement du plan laser tout en restant en permanence perpendiculaire à la surface inférieure 401 de la plaque 40.

Pour ce faire, on définit cette surface inférieure 401 de la plaque 40 par rapport à un plan de référence p_{ref}, situé par convention en-dessous de celle-ci. De façon avantageuse, ce plan p_{ref} est supposé horizontal. Il existe donc, a priori trois paramètres à acquérir et numériser, pour tout point pᵢ de la plaque 40, suivant l'axe Δ (figure 1). Enfin son épaisseur "*e*" étant constante, la connaissance des caractéristiques dimensionnelles de la surface inférieure 401 permet de déduire les caractéristiques dimensionnelles de la surface supérieure 400.

Les paramètres qu'il est nécessaire d'acquérir et de numériser sont donc les suivants : xᵢ ou éloignement d'un point quelconque pᵢ de la surface inférieure 401 par rapport à une abscisse origine x₀, vᵢ la distance séparant pᵢ de xᵢ (le segment de droite pᵢ-xᵢ étant perpendiculaire à la surface 401 en pᵢ) et αᵢ l'angle que forme le segment de droite vᵢ-pᵢ avec l'axe des abscisses. L'axe des abscisses x est parallèle à l'axe Δ.

Pour réaliser l'étalonnage de l'espace de travail au-dessus de la surface supérieure 400, maintenant que la cinématique de déplacement du plan laser, perpendiculairement à cette surface, a été définie, la mire 6 est rendue solidaire du berceau porte-capteurs 2 (figure 1). Afin de permettre un étalonnage aussi proche que possible de la plaque transparente, la mire d'étalonnage 6 se déplace à une distance constante, la plus faible possible, de la plaque 40, par un système de roulements. Pour ce faire, elle est munie de roulettes, 611 et 612 respectivement, de chaque côté de la plaque 60 porte-piges. Cette disposition permet un roulement sur la surface supérieure 400 de la plaque transparente 40. Elle est enfin munie, dans sa partie supérieure d'une tige 613 reliée mécaniquement à un capteur 7 qui mesure le déplacement vᵢ, en tout point pᵢ.

Par ces dispositions, le plan que forme la plaque 60 de la mire 6, confondu avec le plan laser de mesure unique précité des capteurs, reste toujours perpendiculaire à la surface 400, et donc à la surface 401.

En résumé, le capteur de déplacement 7 permet alors d'obtenir la mesure vᵢ, qui détermine en complément avec les mesures xᵢ et αᵢ la position exacte de la mire d'étalonnage 6, et donc des piges elles-mêmes 600. En d'autres termes, on part de xᵢ pour obtenir αᵢ en numérisant la surface 401, puis on part de xᵢ et de αᵢ pour obtenir vᵢ en procédant à l'étalonnage de l'espace de mesure. En pratique, on procède à une numérisation fine (déplacements en x par pas de 1 mm) en fonction de la forme de la plaque transparente.

Comme illustré plus particulièrement par la figure 3, qui représente, en coupe un fragment agrandi de la plaque 40, on constate que les caméras ne "voient" pas perpendiculairement à la surface transparente. Sur cette figure on a représenté un des capteurs disposés sous la plaque 40, en l'occurrence le capteur Cₐ₃. Celui-ci est muni de deux caméras, C₃₁ et C₃₂.

De plus, les déformations de la plaque amènent les caméras, C₃₁ et C₃₂ respectivement, à "voir" de manière différente, c'est-à-dire que les angles d'incidence β et γ des caméras par rapport à la plaque transparente étant différents, le parcourt optique est différent. La source laser lₐ₃ du capteur Cₐ₃ émet un faisceau lamellaire f₂₃ suivant un axe moyen d'émission Δ' orthogonal en pᵢ à la surface inférieure 401 de la plaque 40. Les caméras, C₃₁ et C₃₂ voient des points P₃₁ et P₃₂ décalées sur l'axe Δ', la distance séparant ces points P₃₁ et P₃₂ étant égale à δ1, du fait des angles de réfraction β et γ différents.

Le rôle de l'étalonnage est donc de définir les paramètres de restitution des données tridimensionnelles pour chaque caméra en fonction des données de base de la cinématique précédemment définie : paramètres xᵢ, αᵢ, et vᵢ.

La plaque transparente étant dotée d'une épaisseur constante, comme il a été rappelé, il existe a priori deux méthodes qui conduiront à définir une cinématique, soit à partir de la numérisation de la surface supérieure 400, soit à partir de la numérisation de la surface inférieure 401.

En se reportant de nouveau à la figure 1, on va expliciter la première méthode. Selon cette méthode, il est procédé aux phases et étapes suivantes :
a/ phase d'étalonnage des capteurs :
   - étape I : extinction des faisceaux des lasers des capteurs, Cₐ₃ et Cₐ₄, situés sous la plaque 40, ceux situés au-dessus continuant à fonctionner (par exemple faisceau f₂₁ du capteur C₁₁) ;
   - étape II : étalonnage des caméras (par exemple C₁₁-C₁₂) des capteurs, Cₐ₁ et Cₐ₂, situés au-dessus de la plaque 40, rotation bloquée, sur une seule section de l'espace. La mire 6 (figure 2) n'est donc pas déplacée pour cette étape et les paramètres d'étalonnage sont calculés à partir d'une seule numérisation de la mire d'étalonnage 6 ;
b/ phase de numérisation de la plaque 40 :
   - étape I : blanchiment temporaire de la surface supérieure 400 de la plaque 40 de façon à la rendre temporairement opaque ;
   - étape II : balayage de cette surface 400 par le plan laser commun, sans rotation de celui-ci ;
   - étape III : détermination de la zone de travail pour ultérieurement éliminer des points parasites qui pourraient être relevés en dessous de la surface supérieure 400 de la plaque 40.

La seconde méthode va maintenant être explicitée. Selon cette méthode, il est procédé aux phases et étapes suivantes :
a/ phase d'étalonnage des capteurs :
   - étape I : démontage de la plaque 40 (retrait) ;
   - étape II : extinction des faisceaux des lasers des capteurs, Cₐ₁ et Cₐ₂, situés au-dessus de la plaque 40, ceux situés au-dessous continuant à fonctionner ;
   - étape III : étalonnage des caméras (par exemple C₄₁) des capteurs, Cₐ₃ et Cₐ₄, situés au-dessous de la plaque 40, rotation bloquée, sur une seule section de l'espace ; la mire 6 (figure 2) n'est donc pas déplacée pour cette étape et les paramètres d'étalonnage sont calculés à partir d'une seule numérisation de la mire d'étalonnage 6 ; pour ce faire, la mire d'étalonnage 6 est descendue au maximum, de sorte que les piges 600 couvrent l'espace précédemment occupé par la surface inférieure 401 de la plaque 40 ;
b/ phase de numérisation de la plaque 40 :
   - étape I : blanchiment temporaire de la surface inférieure 401 de la plaque 40 ;
   - étape II : balayage de cette surface 401 par le plan laser commun, sans rotation de celui-ci ;
   - étape III : détermination de la zone de travail pour ultérieurement éliminer des points parasites qui pourraient être relevés en dessous de la surface supérieure 400 de la plaque 40, en tenant compte de l'épaisseur constante de celle-ci ;

Dans une de variante de cette seconde méthode (non représentée), lorsque l'on rencontre un environnement difficile qui exclut le démontage de la plaque transparente afin de disposer d'un seul système d'étalonnage, il est alors nécessaire d'utiliser deux mires d'étalonnage, les mires étant disposées de part et d'autre de la plaque 40. Naturellement, la seconde mire n'est nécessaire que dans le cas où la paroi transparente 40 est doté d'un profil non-plan à numériser.

Le choix de la méthode dépend de plusieurs facteurs. En particulier, le choix de la seconde méthode est fortement tributaire de :
- la facilité d'accès à la surface inférieure 401 et à la surface supérieure 400;
- l'existence ou non de capteurs au-dessus de la surface supérieure 400.

A titre d'exemple, dans le cas du système de numérisation d'un pied humain qui vient d'être décrit, l'accès à la surface inférieure 401 impose le démontage de la plaque 40. On préfère donc, dans ce cas, la première solution, car on dispose de deux capteurs, Cₐ₁ et Cₐ₂ (dans l'exemple décrit), situés au-dessus de la plaque 40.

Par contre, dans le cas d'un environnement difficile où, par hypothèse, l'accès n'est autorisé qu'à l'une des surfaces, inférieure par exemple (c'est-à-dire extérieure à l'espace à mesurer), où se trouvent tous les capteurs, on est amené à choisir la seconde solution.

La phase d'étalonnage est effectuée une fois pour toutes, du moins pour une plaque 40 donnée, également pour un laps de temps donné, ce de manière à tenir compte d'éventuelles dérives dans le temps.

Les caractéristiques acquises et numérisées de la plaque 40 sont transformées par le processus d'étalonnage dans un référentiel absolu et mémorisées. Il doit être bien clair également que le processus d'étalonnage n'a pas concerné uniquement un plan isolé, lié à une seule position pᵢ, mais tout l'espace de mesure.

En régime normal de mesure, le porte-capteurs 2, mu par les moyens de translation 5 va se déplacer le long de l'axe Δ (figure 1). Ceux-ci sont sous la commande des organes de traitement de signal 3. Sa position le long de cet axe Δ peut être facilement déterminée. Pour chaque point pᵢ de mesure (acquisition d'une section Sᵢ), d'abscisse xᵢ, on connaît la valeur de αᵢ et vᵢ, d'après les données enregistrées lors de l'étalonnage. Notamment, connaissant αᵢ, on impose à l'aide du moteur de commande rotation 53, une rotation correspondante du porte-capteurs et de ce fait une inclinaison du plan laser de mesure unique qui fait que celui-ci reste orthogonal en tout point pᵢ aux surfaces de la plaque 40.

Les données successivement acquises et numérisées (plans de sections Sᵢ) vont donc pouvoir être transformées en coordonnées absolues, connaissant la position du porte-capteurs 2 le long de l'axe Δ lors de l'acquisition. Il est à noter que ces données sont corrigées, donc exemptes des erreurs dues à la non planéité de la plaque 40. L'accumulation des données afférentes aux diverses sections acquises et numérisées le long de l'axe Δ permet de reconstituer la forme extérieure exacte du pied 4. Ces données, comme il a été indiqué, sont mémorisées pour un traitement ultérieur qui permettra de réaliser des chaussures sur mesure. On peut naturellement contrôler *in situ*, en temps réel, le processus d'acquisition et de numérisation en affichant le résultat des sections acquises sur un écran de visualisation. Ce résultat peut s'afficher sous mode dit "filaire", par exemple en "fausses couleurs", ou à l'aide d'un logiciel approprié de "lissage" et d'interpolation, sous une forme plus élaborée plus proche de la réalité.

On va maintenant décrire un exemple d'application du procédé de l'invention appartenant à ce qui a été appelé seconde famille d'applications.

Pour ce faire, on va se placer dans le cadre de la conception d'un joint compressible, par exemple en caoutchouc, destiné à un véhicule automobile : portière, hayon arrière, etc.

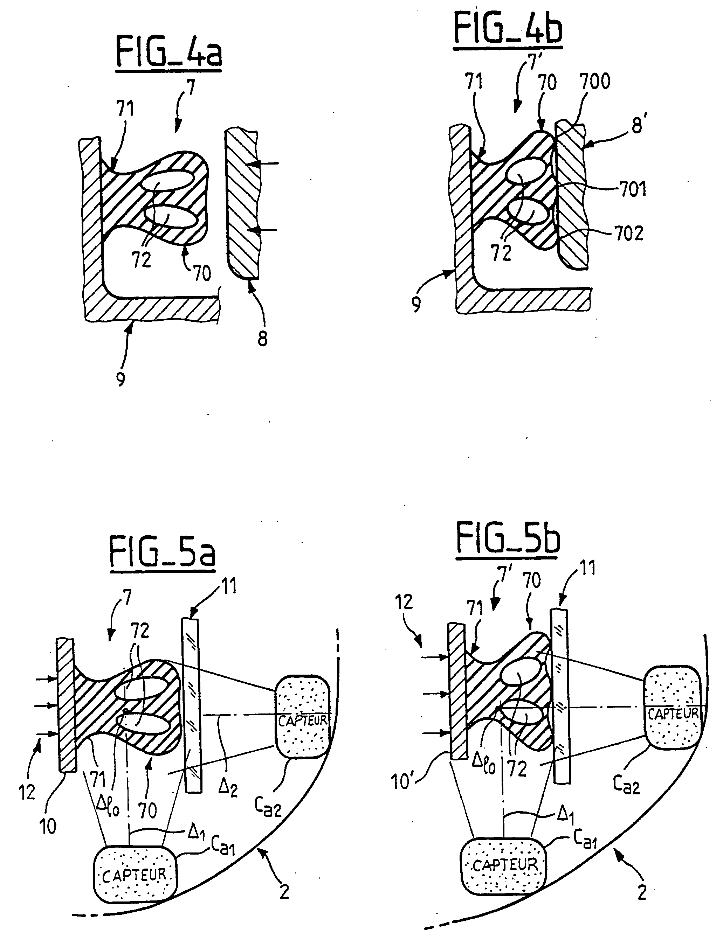

Les figures 4a et 4b illustrent le comportement d'un joint d'étanchéité 7 en caoutchouc, pour portière automobile 8, au repos (portière ouverte) et déformé (portière fermée), respectivement.

Celui-ci comporte une embase 71, collée ou fixée de toute façon appropriée au châssis d'un véhicule 9, et une tête 70 qui va être mise en contact avec la surface interne de la portière 8 et progressivement écrasée (position 8' de la portière et 7' du joint).

La figure 4b représente le joint 7 soumis à des contraintes de pression par la portière fermée 8'. Pour améliorer l'étanchéité, il est avantageux que le joint, une fois écrasé (position 7') présente plusieurs points de contact (trois dans l'exemple illustré : 700, 701, 702) avec la surface interne de la portière fermée (position 8').

Les dimensions du joint 7, le profil particulier de la tête 70, l'existence éventuelle de canaux internes 72 ainsi que ses propriétés mécaniques : élasticité, etc., permettront d'atteindre les buts fixés.

La conception d'un tel type de joint pourra être effectuée avantageusement en faisant appel, comme il a été rappelé, à la CAO. On pourra notamment, grâce à de telles méthodes, simuler les déformations du joint lorsqu'il est soumis à des contraintes et prévoir son efficacité dans la fonction qui lui est impartie, à savoir une fonction étanchéité.

Une fois la conception "théorique" effectuée, il reste à valider les calculs en réalisant un prototype conforme à ceux-ci et à tester ce prototype dans des conditions réelles d'utilisation. Il est donc nécessaire, ce stade, de mesurer et visualiser les déformations réellement subies lorsque la porte est refermée.

Le procédé de l'invention permet de numériser, en continu, ces déformations et de les visualiser.

Les figures 5a et 5b illustrent schématiquement un système de numérisation selon l'invention permettant de mener à bien cette numérisation.

Le système comprend essentiellement deux plaques, l'une 10, opaque, simule la carrosserie (figures 4a et 4b : 9) d'un véhicule et l'autre 11, en matériau transparent, simule la portière (figures 4a et 4b : 8 et 8') d'un véhicule.

Il comprend également des capteurs optiques conformes à l'invention, deux, Cₐ₁ et Cₐ₂, dans l'exemple illustré. Ceux-ci émettent des faisceaux laser, fₗ₁ et fₗ₂, suivant des directions, Δ₁ et Δ₂, avantageusement orthogonales entre elles. Naturellement, conformément à l'une des caractéristiques de l'invention, ces faisceaux, fₗ₁ et fₗ₂, sont coplanaires.

Le joint 7 est fixé par sa base 71, sur la plaque opaque 10, dans des conditions similaires à ce qui est réalisé sur un véhicule. La tête du joint 70 est mise en contact avec la paroi transparente 11 simulant la portière précitée (portière ouverte sur la figure 5a).

Pour des raisons de commodité techniques, la distance séparant le capteur Cₐ₂ (qui observe la tête 70 du joint par le haut : suivant l'axe Δ₂) de la paroi transparente 11 devant rester constante, une fois le système étalonné, ce n'est pas la plaque 11 qui va être mise en mouvement, mais la plaque opaque 10, suivant une direction parallèle à l'axe Δ₂. Il est clair que cette inversion de mouvement ne fausse en aucune façon le comportement du joint soumis à contrainte, puisque c'est le mouvement relatif d'une plaque 10 vers l'autre 11 qui provoque l'écrasement de la tête 70 du joint (position 7'), ce dans des conditions tout à fait similaires à la réalité. On reproduit ainsi fidèlement les contraintes de compression que l'on rencontre lorsque la portière (figure 4b : 8') est en position "fermée". La figure 5b simule cet état "portière fermée" (plaque opaque en position 10'). Le mouvement de translation relative, d'une plaque vers l'autre, est obtenu par tout moyen classique approprié 12 : moteur linéaire, piston hydraulique, etc.

On comprend aisément que le profil du joint 7, et plus particulièrement la zone de tête 70, peut être numérisé au repos (figure 5a) et visualisé sur un écran (non représenté), puisqu'il est "vu" par les deux capteurs Cₐ₁ et Cₐ₂, directement (capteur Cₐ₁) ou au travers de la paroi transparente 11 (capteur Cₐ₂). Cette numérisation s'effectue conformément au procédé de l'invention, comme décrit précédemment.

Il peut l'être également en position entièrement compressée (figure 5b : position 7' et plaque opaque en position 11'), simulant la position "portière fermée". Mais il peut l'être également pour toute position intermédiaire entre ces deux extrêmes, et de façon préférentielle, en continu.

De cette manière, on peut comparer, à tout moment, le profil mesuré avec un modèle de référence, tel que conçu en CAO, en simulant les mêmes contraintes.

Si les écarts mesurés dépassent des limites préétablies, par excès ou par défaut, il est alors possible de réinjecter en CAO les données réelles issues de la mesure du prototype (en vue d'un nouveau calcul) et, d'exécuter autant d'itérations que nécessaire du processus qui vient d'être décrit, jusqu'à obtention d'un joint dont le comportement réponde aux besoins exprimés.

Le fait de n'utiliser que deux capteurs, comme illustré par les figures 5a et 5b, ne permet pas de saisir une section complète : le dessus de la zone de tête 70 et l'un des côtés seulement du joint 7 sont observables et numérisés. D'ailleurs, seules les déformations de la zone de tête 70, vues de haut et de côté, présentent un intérêt réel, la base 71 étant fixée à la plaque 11 (à la carrosserie 9, dans les conditions réelles d'utilisation). On pourrait toutefois ajouter un troisième capteur, de façon à observer également l'autre côté du joint 7.

Comme dans le cas du système de numérisation d'un pied humain, décrit en regard de la figure 1, il est nécessaire de procéder à une phase initiale d'étalonnage. Un procédé tout à fait similaire à ce lui précédemment décrit en regard de la figure 2 peut être mis en oeuvre. Il est donc inutile de le redécrire.

De manière similaire également à ce qui à été décrit pour le système précité, le système de numérisation du joint de caoutchouc comporte des circuits de traitement de signaux (non représentés). Les capteurs sont aussi montés sur un porte-capteurs 2. Si les mesures doivent être effectuées sur une portion ou sur la totalité du joint 7, il est enfin nécessaire de prévoir des moyens d'entraînement du berceau porte-capteurs 2, par exemple le long d'un axe longitudinal Δₗₒ, orthogonal aux axes Δ₁ et Δ₂. Ces moyens d'entraînement peuvent être similaires à ceux décrits en regard de la figure 1.

A la lecture de la description qui précède, on constate que l'invention atteint bien les buts qu'elle s'est fixés.

Il doit être clair cependant que celle-ci n'est pas limitée aux seuls exemples de réalisations précisément décrits, notamment en relation avec lés figures 1 à 3. Notamment, bien que dans un mode de réalisation préféré, le système soit du type multicapteurs, ce qui permet l'acquisition et la numérisation d'une section complète d'un objet, en une seule passe, le système selon l'invention peut ne comporter qu'un seul capteur optique, dans la mesure où il n'est pas nécessaire d'effectuer l'acquisition et la numérisation d'une section complète d'un objet. C'est le cas, par exemple de la numérisation de la plante d'un pied.

Il doit être clair aussi que, bien que particulièrement adaptée aux applications qui viennent d'être décrites de façon, on ne saurait cantonner l'invention à ces seuls types d'applications. Elle s'applique aussi à l'acquisition et la numérisation de tout objet au travers d'une surface transparente.

## Revendications

1. Procédé d'acquisition et de numérisation d'un objet (4, 7) à l'aide d'au moins un capteur (Cₐ₁ à Cₐ₄) comprenant une source laser (lₐ₃) générant vers ledit objet (4, 7) un faisceau lamellaire (f₁₃) formant un plan laser de mesure et au moins une caméra (C41) observant cet objet (4, 7), ledit capteur (Cₐ₁ à Cₐ₄) étant fixé à un porte-capteurs mobile (2),
**caractérisé en ce que**, ledit objet étant observé au travers d'une paroi transparente (40), d'épaisseur constante et dotée d'un profil susceptible d'être balayé en permanence par un plan laser orthogonal à l'une des surfaces de cette paroi transparente (40), suivant un axe déterminé (Δ), il comprend au moins les phases suivantes :
- une phase préliminaire comprenant au moins les étapes suivantes :
a/définition d'un espace de mesure englobant ledit objet (4, 7) à acquérir et à numériser ;
b/ numérisation de ladite paroi transparente (40) afin d'en déterminer les caractéristiques géométriques par rapport à un plan de référence (p_{ref});
c/ définition d'une cinématique de déplacement dudit capteur selon ledit axe déterminé (Δ) en l'inclinant par rapport à cet axe de telle sorte que le plan laser qui en est issu reste en permanence perpendiculaire à la surface de ladite paroi transparente (40), et étalonnage de la totalité dudit espace de mesure à l'aide d'une mire d'étalonnage (6) se déplaçant perpendiculairement à la paroi transparente (400) suivant ledit axe déterminé (Δ) ;
d/transformation des données de coordonnées ainsi acquises et numérisées dans un référentiel absolu, et mémorisation de celles-ci ;
- et une phase d'acquisition et de numérisation dudit objet comprenant au moins les étapes suivantes :
a/ déplacement dudit porte-capteurs (2) suivant ledit axe déterminé (Δ) conformément à ladite cinématique de déplacement de manière que ledit plan laser de mesure reste perpendiculaire à ladite paroi transparente (40) ;
b/acquisition et numérisation, par tranches successives, de tout ou partie de sections (Sᵢ) de l'objet (4, 7) ;
c/ transformation des données de coordonnées ainsi acquises dans ledit référentiel absolu par corrélation avec lesdites données issues de l'étalonnage de l'espace de mesure et mémorisées.

2. Procédé selon la revendication 1, **caractérisé en ce que** ledit plan laser de mesure est la combinaison de plans laser particuliers créés par plusieurs capteurs optiques (Cₐ₃ à Cₐ₄) fixés audit porte-capteurs (2) et entourant en tout ou partie ledit objet (4, 7), il est procédé, pendant ladite phase préliminaire, à une étape supplémentaire consistant en un réglage de la coplanéité des plans lasers individuels (f₂₁) émis par ces lasers (Cₐ₁ à Cₐ₄), de manière à former un plan laser de mesure unique.

3. Procédé selon l'une des revendications 1 ou 2, **caractérisé en ce que** ladite paroi transparente (40) est non plane, pour recevoir un pied humain constituant ledit objet.

4. Procédé selon l'une des revendications 1 ou 2, **caractérisé en ce que** les surfaces (400, 401) de ladite paroi transparente (40) sont réglées par des droites parallèles (Dᵢ) perpendiculaires audit axe déterminé (Δ).

5. Procédé selon l'une des revendications 1 ou 2, **caractérisé en ce que** les surfaces (400, 401) de ladite paroi transparente (40) sont cylindriques.

6. Procédé selon l'une des revendications 1 ou 2, **caractérisé en ce que** les surfaces (400, 401) de ladite paroi transparente (40) forment une surface de révolution, développée à partir d'une courbe régulière par rotation autour d'un même axe.

7. Procédé selon l'une quelconque des revendications 4 à 6, **caractérisé en ce que** ladite étape de numérisation de la paroi transparente (40) comprend les phases suivantes :
a/ une phase d'étalonnage des capteurs comprenant les étapes suivantes :
- extinction des faisceaux des lasers des capteurs (Cₐ₃ et Cₐ₄) situés sous ladite paroi transparente (40), ceux situés au-dessus restant allumés (f₂₁) ;
- étalonnage des caméras (C₁₁-C₁₂) des capteurs (Cₐ₁ et Cₐ₂) situés au-dessus de la paroi transparente (40), ledit porte-capteurs (2) et ladite mire d'étalonnage (6) restant immobiles, sur une seule section de l'espace, et détermination des paramètres d'étalonnage à partir d'une seule numérisation de la mire d'étalonnage (6) ;
b/ une phase de numérisation de la paroi transparente (40) comprenant les étapes suivantes :
- blanchiment temporaire de la surface supérieure (400) de la paroi transparente (40), de façon à la rendre temporairement opaque, en tout ou partie, de manière qu'elle soit vue par lesdits capteurs ;
- balayage de cette surface supérieure (400) par ledit plan laser commun, sans rotation de celui-ci ;
- détermination d'une zone de travail de manière à pouvoir éliminer, dans une phase ultérieure, des points parasites susceptibles d'être relevés en dessous de la surface supérieure (400) de la paroi transparente (40).

8. Procédé selon la revendication 6, **caractérisé en ce que** ladite étape de numérisation de la paroi transparente (40) comprend les phases suivantes :
a/ une phase d'étalonnage des capteurs comprenant les étapes suivantes :
- retrait de ladite paroi transparente (40) ;
- extinction des faisceaux des lasers des capteurs (Cₐ₁ et Cₐ₂) situés au-dessous de ladite paroi transparente (40), ceux situés au-dessus restant allumés ;
- étalonnage des caméras (C₄₁) des capteurs (Cₐ₃ et Cₐ₄) situés au-dessus de la paroi transparente (40), ledit porte-capteurs (2) et ladite mire d'étalonnage (6) restant immobiles, sur une seule section de l'espace, et détermination des paramètres d'étalonnage à partir d'une seule numérisation de la mire d'étalonnage (6), ladite mire (6) étant préalablement déplacée pour se trouver dans une zone de l'espace occupée par la paroi transparente (40) avant son retrait ;
b/ une phase de numérisation de la paroi transparente (40) comprenant les étapes suivantes :
- blanchiment temporaire de la surface inférieure (401) de la paroi transparente (40), de façon à la rendre temporairement opaque, en tout ou partie, de manière qu'elle soit vue par lesdits capteurs ;
- balayage de cette surface inférieure (401) par ledit plan laser commun, sans rotation de celui-ci ;
- détermination d'une zone de travail de manière à pouvoir éliminer, dans une phase ultérieure, des points parasites susceptibles d'être relevés en dessous de la surface supérieure (400) de la paroi transparente (40) ;
- détermination de ladite surface supérieure (400) de la paroi transparente (40) à partir de la surface inférieure (401).

9. Procédé selon l'une des revendications 7 ou 8, **caractérisé en ce que** ladite étape de numérisation de la paroi transparente (40) comprend l'acquisition des paramètres géométriques suivants en tout point pᵢ, pᵢ étant un point quelconque de cette face (401) suivant une direction parallèle audit axe déterminé (Δ) :
- l'abscisse xᵢ de l'intersection d'une droite perpendiculaire en pᵢ à ladite face (401) avec un axe d'abscisse, par rapport à une abscisse d'origine x₀ formant référence ;
- l'angle αᵢ que forme cette droite perpendiculaire en pᵢ avec l'axe des abscisse ;
- et la distance vᵢ séparant ladite intersection du point pᵢ.

10. Procédé selon la revendication 9, **caractérisé en ce que** les mesures de l'abscisse xᵢ et de l'angle αᵢ sont effectuées en mesurant le déplacement de ladite mire (6) suivant ledit axe déterminé (Δ) et en mesurant le mouvement de rotation dudit plan laser de mesure.

11. Procédé selon la revendication 10, **caractérisé en ce que** la dite mire (6) repose en permanence sur la face opposée (400) aux capteurs lors dudit étalonnage, de manière à en suivre la surface, et **en ce qu'**elle est en outre couplée à un capteur (7) de déplacement de manière à effectuer une mesure de distance vᵢ séparant ladite intersection du point pᵢ.

12. Procédé selon l'une quelconque des revendications 2 à 11, **caractérisé en ce que**, pour chaque tranche, une section complète (Sᵢ) dudit objet (4, 7) est acquise et numérisée, en une seule passe.

13. Système pour l'acquisition et la numérisation d'un objet (4, 7), comprenant
- au moins un capteur optique (Cₐ₁ à Cₐ₄) comprenant une source laser (lₐ₃) générant vers ledit objet (4, 7) un faisceau lamellaire (f₁₃) formant un plan laser de mesure et au moins une caméra (C₄₁) observant cet obiet (4, 7) au travers d'une paroi transparente (40) d'épaisseur constante,
- un porte-capteurs mobile (2) auquel est fixé ledit capteur,
- des moyens pour commander ledit porte-capteurs (2) suivant une cinématique de déplacement dudit capteur selon un axe de balayage déterminé (Δ) en l'inclinant si besoin par rapport à cet axe de telle sorte que le plan laser qui en est issu reste en permanence perpendiculaire à ladite paroi transparente (40),
- des moyens de traitement de signal et de mémorisation de données (3) pour:
définir ladite cinématique de déplacement pendant une phase préliminaire de numérisation de ladite paroi transparente (40) et d'étalonnage d'un espace de mesure englobant ledit objet (4, 7) à acquérir et numériser,
transformer des données de coordonnées ainsi acquises et numérisées dans un référentiel absolu et les mémoriser,
recevoir de ladite caméra (C₄₁) des signaux d'acquisition et de numérisation de sections successives (Sᵢ) dudit objet (47), pendant une phase d'acquisition et de numérisation lors d'un déplacement dudit objet conformément à ladite cinématique précédemment définie.
transformer des données de coordonnées ainsi acquises dans ledit référentiel absolu par corrélation avec les données issues de l'étalonnage de l'espace de mesure et mémorisées.

14. Système suivant la revendication 13, **caractérisé**
- **en ce que** ledit porte-capteurs (2) est en forme de berceau mobile en translation sur un rail de guidage (50) parallèle audit axe déterminé de balayage (Δ) et mobile en rotation pour basculer autour d'un second axe déterminé (Δ_{R}), orthogonal au premier,
- et **en ce qu'**il comporte un ensemble de capteurs optiques (Cₐ₁ à Cₐ₄) montés sur ledit porte-capteurs, une partie au moins desdits capteurs se disposant sous un support non plan (40) formant ladite paroi transparente sur lequel repose ledit objet (4, 7), une partie au moins des capteurs (Cₐ₃ à Cₐ₄) étant disposés sous ce support (40),
- et **en ce que** lesdits moyens de commande du porte-capteurs (2) sont constitués par des moyens de translation et de basculement (5) suivant ladite cinématique comprenant un premier moteur (51) d'entraînement dudit porte-capteurs (2) le long de ce rail (50) et un second moteur (53) commandant le basculement autour dudit second axe (Δ_{R}).

15. Système selon l'une des revendications 13 ou 14, **caractérisé en ce que** lesdits moyens de traitement de signal et de mémorisation (3) comprennent en outre un organe de visualisation (Vᵢₛᵤ) pour le contrôle en temps réel du processus d'acquisition et de numérisation des sections successives (Sᵢ) dudit objet (4, 7).

16. Système selon l'une quelconque des revendications 13 à 15, **caractérisé en ce que** l'on prévoit une mire (6) constituée d'une paroi transparente (60) comportant des piges (600) arrangées selon une organisation matricielle régulière, pour réaliser un étalonnage initial, et **en ce que** cette mire (6) est rendue solidaire dudit porte-capteurs (2) de manière à se déplacer avec celui-ci.

17. Système selon la revendication 16, **caractérisé en ce que** ladite mire (6) est montée sur des roulements (611, 612) de manière à suivre la face supérieure (400) dudit support (40).

18. Système selon la revendication 17, **caractérisé en ce que** ladite mire (6) est couplée à un capteur de déplacement (7) suivant une direction perpendiculaire audit support (40).

19. Application du procédé selon une quelconque des revendications 1 à 12 à l'acquisition et la numérisation de la forme d'un pied humain (4), de manière à collecter des données nécessaires à la création de chaussures sur mesure.

20. Application du procédé selon l'une quelconque des revendications 1 à 12 à l'acquisition et à la numérisation en continu de sections d'un joint compressible (7), notamment destiné à assurer l'étanchéité entre une pièce de carrosserie (9) et une portière (8) exerçant des contraintes sur ledit joint (7) lorsqu'elle est en position fermée (8').

21. Application selon la revendication 20, **caractérisé en ce que** ledit joint (7). est disposé entre un support plan opaque (10) et une paroi transparente (11), **en ce que** ce support plan opaque (10) est mu d'un mouvement de translation vers la paroi transparente (11), de manière à exercer des contraintes de compression simulant lesdites contraintes exercées sur le joint (7) par la portière en position fermée (8'), et **en ce que** lesdites acquisition et numérisation de sections dudit joint (7) s'effectuent de façon continue pendant ledit mouvement de translation.

## Claims

1. A process for acquisition and digitisation of an object (4, 7) with the aid of at least one sensor (Cₐ₁ to Cₐ₄) comprising a laser source (lₐ₃) generating towards said object (4, 7) a lamellar beam (f₁₃) forming a laser-measurement plane and at least one camera (C₄₁) observing said object (4, 7), said sensor (Cₐ₁ to Cₐ₄) being fixed to a mobile sensor-carrier (2),
**characterised in that**, said object being observed through a transparent wall (40) of constant thickness and endowed with a profile capable of being scanned continuously across a laser plane orthogonal to one of the surfaces of said transparent wall (40) along a predetermined axis (Δ), said process comprises at least the following phases:
- a preliminary phase comprising at least the following stages:
a/ definition of a measurement space encompassing said object (4, 7) to be acquired and digitised;
b/ digitisation of said transparent wall (40) in order to determine therefrom the geometrical characteristics with respect to a reference plane (p_{ref});
c/ definition of displacement kinematics of said sensor along said predetermined axis (Δ) by inclining it with respect to said axis in such a way that the laser plane derived therefrom remains continuously perpendicular to the surface of said transparent wall (40), and calibration of the whole of said measurement space with the aid of a calibration test object (6) which is displaced perpendicularly to the transparent wall (400) along said predetermined axis (Δ);
d/ transformation of the coordinate data thus acquired and digitised into an absolute system of reference, and storage of said data;
- and a phase of acquisition and digitisation of said object, comprising at least the following stages:
a/ displacement of said sensor-carrier (2) along said predetermined axis (Δ) in conformity with said displacement kinematics in such a way that said laser-measurement plane remains perpendicular to said transparent wall (40);
b/ acquisition and digitisation, in successive slices, of all or part of sections (Sᵢ) of the object (4, 7);
c/ transformation of the coordinate data thus acquired into said absolute system of reference by correlation with said data derived from the calibration of the measurement space and stored.

2. Process according to Claim 1, **characterised in that** said laser-measurement plane is the combination of particular laser planes created by several optical sensors (Cₐ₃ to Cₐ₄) fixed to said sensor-carrier (2) and surrounding said object (4, 7) entirely or partially, during said preliminary phase a supplementary stage is carried out consisting in an adjustment of the co-planarity of the individual laser planes (f₂₁) generated by said lasers (Cₐ₁ to Cₐ₄) so as to form a unique laser-measurement plane.

3. Process according to one of Claims 1 or 2, **characterised in that** said transparent wall (40) is non-planar in order to receive a human foot constituting said object.

4. Process according to one of Claims 1 or 2, **characterised in that** the surfaces (400, 401) of said transparent wall (40) are adjusted by parallel straight lines (Dᵢ) perpendicular to said predetermined axis (Δ).

5. Process according to one of Claims 1 or 2, **characterised in that** the surfaces (400, 401) of said transparent wall (40) are cylindrical.

6. Process according to one of Claims 1 or 2, **characterised in that** the surfaces (400, 401) of said transparent wall (40) form a surface of revolution which is developed from a regular curve by rotation about an identical axis.

7. Process according to any one of Claims 4 to 6, **characterised in that** said stage of digitisation of the transparent wall (40) comprises the following phases:
a/ a phase of calibration of the sensors, comprising the following stages:
- extinction of the beams of the lasers of the sensors (Cₐ₃ and Cₐ₄) situated under said transparent wall (40), those situated above remaining lit (f₂₁) :
- calibration of the cameras (C₁₁-C₁₂) of the sensors (Cₐ₁ and Cₐ₂) situated above the transparent wall (40), said sensor-carrier (2) and said calibration test object (6) remaining immobile, over a single section of the space, and determination of the calibration parameters from a single digitisation of the calibration test object (6);
b/ a phase of digitisation of the transparent wall (40), comprising the following stages:
- temporary whitewashing of the upper surface (400) of the transparent wall (40) so as to render it temporarily opaque, entirely or partially, in such a way that it is seen by said sensors;
- scanning of said upper surface (400) across said common laser plane without rotation of the latter;
- determination of a working zone so as to be able to eliminate, in a later phase, parasitic points capable of being recorded underneath the upper surface (400) of the transparent wall (40).

8. Process according to Claim 6, **characterised in that** said stage of digitisation of the transparent wall (40) comprises the following phases:
a/ a phase of calibration of the sensors; comprising the following stages:
- removal of said transparent wall (40);
- extinction of the beams of the lasers of the sensors (Cₐ₁ and Cₐ₂) situated underneath said transparent wall (40), those situated above remaining lit;
- calibration of the cameras (C₄₁) of the sensors (Cₐ₃ and Cₐ₄) situated above the transparent wall (40), said sensor-carrier (2) and said calibration test object (6) remaining immobile, over a single section of the space, and determination of the calibration parameters from a single digitisation of the calibration test object (6), said test object (6) being displaced beforehand in order to be located in a zone of the space occupied by the transparent wall (40) prior to its retraction;
b/ a phase of digitisation of the transparent wall (40), comprising the following stages:
- temporary whitewashing of the lower surface (401) of the transparent wall (40) so as to render it temporarily opaque, entirely or partially, in such a way that it is seen by said sensors;
- scanning of said lower surface (401) across said common laser plane without rotation of the latter;
- determination of a working zone so as to be able to eliminate, in a later phase, parasitic points capable of being recorded underneath the upper surface (400) of the transparent wall (40);
- determination of said upper surface (400) of the transparent wall (40) from the lower surface (401).

9. Process according to one of Claims 7 or 8, **characterised in that** said stage of digitisation of the transparent wall (40) comprises the acquisition of the following geometrical parameters at any point pᵢ, pᵢ being any point on said face (401) in a direction parallel to said predetermined axis (Δ) :
- the abscissa xᵢ of the intersection of a straight line perpendicular at pᵢ to said face (401) with an abscissa axis, with respect to an abscissa with origin x₀ forming a reference;
- the angle αᵢ that said straight line perpendicular at pᵢ forms with the abscissa axis;
- and the distance vᵢ separating said intersection from the point pᵢ.

10. Process according to Claim 9, **characterised in that** the measurements of the abscissa xᵢ and of the angle αᵢ are effected by measuring the displacement of said test object (6) along said predetermined axis (Δ) and by measuring the movement in rotation of said laser-measurement plane.

11. Process according to Claim 10, **characterised in that** said test object (6) rests continuously on the opposite face (400) to the sensors in the course of said calibration so as to follow the surface thereof, and **in that** it is coupled moreover to a displacement sensor (7) so as to effect a measurement of distance vᵢ separating said intersection from the point pᵢ.

12. Process according to any one of Claims 2 to 11, **characterised in that** for each slice a complete section (Sᵢ) of said object (4, 7) is acquired and digitised in a single pass.

13. A system for acquisition and digitisation of an object (4, 7), comprising
- at least one optical sensor (Cₐ₁ to Cₐ₄) comprising a laser source (lₐ₃) generating towards said object (4, 7) a lamellar beam (f₁₃) forming a laser-measurement plane and at least one camera (C₄₁) observing said object (4, 7) through a transparent wall (40) of constant thickness,
- a mobile sensor-carrier (2), to which said sensor is fixed,
- means for controlling said sensor-carrier (2) according to displacement kinematics of said sensor along a predetermined scanning axis (Δ) by inclining it, if need be, with respect to said axis so that the laser plane derived therefrom remains continuously perpendicular to said transparent wall (40),
- signal-processing and data-storage means (3) in order to:
define said displacement kinematics during a preliminary phase of digitisation of said transparent wall (40) and of calibration of a measurement space encompassing said object (4, 7) to be acquired and digitised,
transform coordinate data thus acquired and digitised into an absolute system of reference and to store them,
receive from said camera (C₄₁) signals for acquisition and digitisation of successive sections (Sᵢ) of said object (4,7) during a phase of acquisition and digitisation in the course of a displacement of said object in conformity with said kinematics previously defined,
transform coordinate data thus acquired into said absolute system of reference by correlation with the data derived from the calibration of the measurement space and stored.

14. System according to Claim 13, **characterised**
- **in that** said sensor-carrier (2) is in the form of a mobile cradle in translation on a guide rail (50) parallel to said predetermined scanning axis (Δ) and mobile in rotation in order to tilt about a second predetermined axis (Δ_{R}) orthogonal to the first,
- and **in that** it comprises a set of optical sensors (Cₐ₁ to Cₐ₄) mounted on said sensor-carrier, at least some of said sensors being disposed under a non-planar support (40) forming said transparent wall, on which support said object (4,7) rests, at least some of the sensors (Cₐ₃ to Cₐ₄) being disposed under said support (40),
- and **in that** said means for controlling the sensor-carrier (2) are constituted by means for translation and tilting (5) according to said kinematics comprising a first motor (51) for driving said sensor-carrier (2) along said rail (50) and a second motor (53) controlling the tilting about said second axis (Δ_{R}).

15. System according to one of Claims 13 or 14, **characterised in that** said signal-processing and storing means (3) comprise moreover a display device (Vᵢₛᵤ) for monitoring the process of acquisition and digitisation of the successive sections (Sᵢ) of said object (4,7) in real time.

16. System according to any one of Claims 13 to 15, **characterised in that** a test object (6) is provided which is constituted by a transparent wall (60) including rods (600) arranged according to a regular matrix organisation in order to implement an initial calibration, and **in that** said test object (6) is rendered integral with said sensor-carrier (2) so as to be displaced with the latter.

17. System according to Claim 16, **characterised in that** said test object (6) is mounted on bearings (611, 612) so as to follow the upper face (400) of said support (40).

18. System according to Claim 17, **characterised in that** said test object (6) is coupled to a displacement sensor (7) in a direction perpendicular to said support (40).

19. Application of the process according to any one of Claims 1 to 12 to the acquisition and digitisation of the shape of a human foot (4) so as to collect data necessary for the creation of shoes made to measure.

20. Application of the process according to any one of Claims 1 to 12 to the continuous acquisition and digitisation of sections of a compressible seal (7) intended in particular to ensure imperviousness between a bodywork component (9) and a door (8) exerting stresses on said seal (7) when it is in the closed position (8').

21. Application according to Claim 20, **characterised in that** said seal (7) is disposed between an opaque planar support (10) and a transparent wall (11), **in that** said opaque planar support (10) is moved towards the transparent wall (11) by a translatory movement so as to exert compression stresses simulating said stresses exerted on the seal (7) by the door in the closed position (8'), and **in that** said acquisition and digitisation of sections of said seal (7) are effected in continuous manner during said translatory movement.

## Patentansprüche

1. Verfahren zur Erfassung und Digitalisierung eines Gegenstandes (4, 7) mit Hilfe mindestens eines Messfühlers (Cₐ₁ bis Cₐ₄), welches eine Laserquelle (lₐ₃), die einen lamellenförmigen, eine Lasermessebene bildenden, auf den besagten Gegenstand (4, 7) gerichteten Strahl (f₁₃) erzeugt, und mindestens eine den Gegenstand (4, 7) beobachtende Kamera (C₄₁), aufweist, wobei der besagte Messfühler (Cₐ₁ bis Cₐ₄) auf einem mobilen Messfühlerträger (2) befestigt ist.
**dadurch gekennzeichnet, dass** es , wobei der besagte Gegenstand durch eine transparente Wand (40) mit konstanter Dicke beobachtet wird und mit einem Profil versehen ist, welches andauernd von einer rechtwinklig zu einer Oberfläche dieser transparenten Wand (40) stehenden entlang einer vorbestimmten Achse gerichteten Laserebene abgetastet werden kann, mindestens folgende Phasen aufweist:
- eine präliminäre Phase, welche mindestens die folgenden Schritte aufweist:
a) Definition eines den besagten zu erfassenden und zu digitalisierenden Gegenstand (4, 7) einschliessenden Messraumes;
b) Digitalisierung der besagten transparenten Wand (40) , mit dem Ziel, ihre geometrischen Charakteristika in Bezug auf eine Referenzebene (p_{ref}) zu bestimmen;
c) Definition einer Bewegungskinematik des besagten Messfühlers in Bezug auf die besagte bestimmte Achse (Δ) durch Neigung des Messfühlers in Bezug auf diese Achse derart, dass die daraus erzeugte Laserebene dauerhaft rechtwinklig zur Oberfläche der besagten transparenten Wand (40) bleibt, und Eichung des gesamten Messraumes mit Hilfe eines Eichvisiers (6) welches sich rechtwinklig zur transparenten Wand (400) in Bezug auf die besagte vorbestimmte Achse (Δ) bewegt;
d) Transformation der so erfassten und digitalisierten Kordinatendaten in ein absolutes Referenzsystem und Speicherung dieser Daten;
- und eine Erfassungs- und Digitalisierungsphase des besagten Gegenstandes, welche mindestens folgende Schritte aufweist:
a) Bewegung des besagten Messfühlerträgers (2) entlang der besagten bestimmten Achse (Δ) entsprechend der besagten Bewegungskinematik so dass die besagte Messlaserebene rechtwinklig zur besagten transparenten Wand (40) bleibt;
b) Erfassungund Digitalisierung ,per aufeinanderfolgende Schnitte, des ganzen oder von Teilabschnitten (Sᵢ) des Gegenstandes (4, 7)
c) Transformation der so erfassten Koordinatendaten in das besagte absolute Referenzsystem durch Korrelation mit den besagten aus der Eichung des Messraumes hervorgegangenen und gespeicherten Daten .

2. Verfahren nach Anspruch 1, **dadurch gekennzeichnet, dass** die besagte Messlaserebene die Kombination aus einzelnen Laserebenen ist, welche durch mehrere optische auf dem besagten Messfühlerträger (2) befestigte Messfühler (Cₐ₃ bis Cₐ₄) erzeugt worden sind und dass unter Umgebung des ganzen oder eines Teiles des besagten Gegenstandes (4, 7) zu einem zusätzlichen Schritt übergegangen wird, der darin besteht, die Gleichebigkeit der einzelnen von diesen Lasern (Cₐ₁ bis Cₐ₄) abgestrahlten Laserebenen (f₂₁) einzustellen, um eine einzige Messlaserebene zu bilden.

3. Verfahren nach einem der Ansprüche 1 oder 2, **dadurch gekennzeichnet, dass** die besagte transparente Wand (40) nicht eben ist, um einen den besagten Gegenstand darstellenden menschlichen Fuß aufzunehmen.

4. Verfahren nach einem der Ansprüche 1 oder 2, **dadurch gekennzeichnet, dass** die Oberflächen (400, 401) der besagten transparenten Wand (40) durch zur bestimmten Achse (Δ) parallele Geraden (Dᵢ) eingestellt werden.

5. Verfahren nach einem der Ansprüche 1 oder 2, **dadurch gekennzeichnet, dass** die Oberflächen (400, 401) der besagten transparenten wand (40) zylindrisch sind.

6. Verfahren nach einem der Ansprüche 1 oder 2, **dadurch gekennzeichnet, dass** die Oberflächen (400, 401) der besagten transparenten wand (40) eine Rotationsfläche bilden, welche aus einer regelmäßigen Kurve durch Rotation um eine selbe Achse gebildet wird.

7. Verfahren nach irgendeinem der Ansprüche 4 bis 6, **dadurch gekennzeichnet, dass** die besagte Digitalisierungsetappe der transparenten Wand (40) folgende Schritte aufweist:
a) Eine folgende Schritte aufweisende Eichphase der Messfühler
- Abschalten der Laser der Messfühler (Cₐ₃ + Cₐ₄) welche unter der besagten transparenten Wand (40) liegen, wobei die darüber liegenden f₂₁ angeschaltet bleiben;
- Eichen der Kameras (C₁₁-C₁₂) der Messfühler (Cₐ₁ und Cₐ₂), welche über der transparenten Wand (40) liegen, wobei der Messfühlerträger (2) und das besagte Eichvisier (6) nicht bewegt werden, über einen einzigen Raumabschnitt und Bestimmung von Eichparametern, ausgehend von einer einzigen Digitalisierung des Eichvisiers (6);
b) Eine folgende Schritte aufweisende Digitalisierungsphase der transparenten Wand (40):
- vorübergehendes Bleichen der oberen Oberfläche (400) der transparenten Wand (40), um sie vorübergend ganz oder teilweise lichtundurchlässig zu machen, damit sie durch die besagten Messfühler gesehen wird;
- Abtastung dieser oberen Oberfläche (400) durch die besagte gemeinsame Laserebene, ohne dessen Rotation;
- Bestimmung eines Arbeitsgebietes um in einer späteren Phase Parasitenpunkte eliminieren zu können, welche unter der oberen Oberfläche (40) der transparenten Wand (40) entdeckt werden können.

8. Verfahren nach Anspruch 6, **dadurch gekennzeichnet, dass** der besagte Digitalisierungsschritt der transparenten Wand (40) folgende Phasen aufweist:
a) Eine folgende Schritte aufweisende Eichphase:
- Wegnehmen der besagten transparenten Wand (40);
- Abschalten der Laser der Messfühler (Cₐ₁ + Cₐ₂) welche unter der besagten transparenten Wand (40) liegen, wobei die darüber liegenden angeschaltet bleiben;
- Eichen der Kameras (C₄₁) der Messfühler (Cₐ₃ und Cₐ₄), welche über der transparenten Wand (40) liegen, wobei der Messfühlerträger (2) und das besagte Eichvisier (6) nicht bewegt werden, über einen einzigen Raumabschnitt und Bestimmung von Eichparametern, ausgehend von einer einzigen Digitalisierung des Eichvisiers (6); wobei das besagte Visier (6) vorher verschoben wird, um sich in einer von der transparenten Wand (40) vor ihrem Wegnehmen besetzten Raumzone zu befinden;
b) eine folgende Schritte aufweisende Digitalisierungsphase der transparenten Wand (40):
- vorübergehendes Bleichen der unteren Oberfläche (401) der transparenten Wand (40) , um sie vorübergend ganz oder teilweise lichtundurchlässig zu machen, damit sie durch die besagten Messfühler gesehen wird;
- Abtastung dieser unteren Oberfläche (401) durch die besagte gemeinsame Laserebene, ohne dessen Rotation;
- Bestimmung eines Arbeitsgebietes um in einer späteren Phase Parasitenpunkte eliminieren zu können, welche unter der oberen Oberfläche (400) der transparenten Wand (40) entdeckt werden können;
- Bestimmung der besagten oberen Oberfläche (400) der transparenten Wand (40) ausgehend von der unteren Oberfläche (401).

9. Verfahren nach einem der Ansprüche 7 oder 8, dadurch gekennzichnet, **dadurch gekennzeichnet, dass** der Digitalisierungsschritt der transparenten Wand (40) die Erfassungder folgenden geometrischen Parameter in jedem Punkt pᵢ einschliesst, wobei pᵢ ein beliebiger Punkt dieser Seite (401) ist in einer Richtung, welche parallel zur besagten bestimmten Achse (Δ) ist:
- die Abszisse x; des Schnittpunktes einer Geraden, welche in pᵢ rechtwinklig zur Seite (401) ist, mit einer Abszissenachse, welche als Referenz in Bezug auf die Ursprungsabszisse x₀ dient;
- der Winkel αᵢ, den diese im Punkt pᵢ zur Abszissenachse rechtwinklige Gerade bildet;
- und die Entfernung vᵢ die den besagten Schnittpunkt vom Punkt pi trennt.

10. Verfahren nach Anspruch 9, **dadurch gekennzeichnet, dass** das Messen der Abszisse x; und des Winkels αᵢ durch Messen der Bewegung des besagten Visiers (6) entlang der besagten bestimmten Achse (Δ) durchgeführt wird und durch Messen der Rotationsbewegung der besagten Laserebene.

11. Verfahren nach Anspruch 10, **dadurch gekennzeichnet, dass** das besagte Visier (6) beim besagten Eichen auf der den Messfühlern gegenüberliegenden Fläche (400) aufliegt, um der Oberfläche zu folgen, und dass sie ausserdem an einen Bewegungsmessfühler (7) gekoppelt ist, um die Entfernung v; zwischen dem besagten Schnittpunkt und dem Punkt pᵢ zu messen.

12. Verfahren nach irgendeinem der Ansprüche 2 bis 11, **dadurch gekennzeichnet, dass** für jede Scheibe in einem Durchgang ein kompletter Abschnitts (si) des besagten Objekts (4, 7) erfasst und digitalisiert wird.

13. Erfassungs- und Digitalisierungssystem eines Gegenstandes (4, 7) mit:
- mindestens einem optischen Messfühler (Cₐ₁ bis Cₐ₄), welcher eine Laserquelle (lₐ₃), die einen lamellenförmigen, eine Lasermessebene bildenden , auf den besagten Gegenstand (4, 7) gerichteten Strahl (f13) erzeugt, und mindestens eine den Gegenstand (4, 7) durch eine transparente Wand (40) mit konstanter Dicke beobachtende Kamera (C41), aufweist
- einem beweglichen Messfühlerträger(2) auf dem der besagte Messfühler befestigt ist;
- Mitteln zur Steuerung des besagten Messfühlertragers (2) nach einer Bewegungskinematik des besagten Messfühlers in Bezug auf eine bestimmte Abtastachse (Δ) durch dessen Neigung, falls nötig, in Bezug auf diese Achse derart, dass die daraus erzeugte Laserebene dauerhaft rechtwinklig zur Oberfläche der besagten transparenten Wand (40) bleibt;
- Signalverarbeitungs- und Speicherungsmittel für die Daten (3), um:
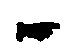 die besagte Bewegungskinematik während einer vorübergehenden Digitalisierungsphase der besagten transparenten Wand (40) und einer Eichphase eines Messraumes welcher den zu erfassenen und digitalisierenden Gegenstand (4, 7) einschliesst, zu definieren,
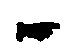 so erfasste und digitalisierte Koordinatendaten in ein absolutes Referenzsystem zu transformieren und zu speichern,
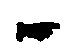 von der besagten Kamera (C₄₁) Erfassungs- und Digitalisierungsdaten aufeinanderfolgender Abschnitte (si) des besagten Gegenstandes (4, 7) während einer Erfassungs- und Digitalisierungsphase während einer Bewegung des besagten Gegenstandes gemäss der besagten vorher definierten Kinematik zu empfangen,
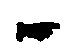 die so erfassten Koordinatendaten in das besagte absolute Bezugssystem durch Korrelation mit aus der Eichung des Messraumes und der Speicherung hervorgegangener Daten zu transfolmieren.

14. System nach Anspruch 13, **dadurch gekennzeichnet,**
- **dass** der besagte Messfühlerträger (2) in Form einer mobilen Wiege ist, welche sich in Translation auf einer Führungsschiene (50) parallel zur besagten bestimmten Abtastachse (Δ) und mobil in Rotation um eine zweite rechtwinklig zur ersten bestimmte Achse (Δ_{R}) befindet,
- **dass** es ein auf dem besagten Mssfühlerträger montiertes Ensemble optischer Messfühler (Cₐ₁ bis Cₐ₄) aufweist, während mindestens ein Teil der besagten Messfühler unter einer nicht ebenen Halterung (40) angeordnet wird, wobei die transparente Wand auf dem besagten Objekt (4) aufliegt, und mindestens ein Teil der Messfühler (Cₐ₃ bis Cₐ₄) unter dieser Halterung (40) angeordnet ist,
- und **dass** die besagten Steuerungsmittel des Messfühlerträgers (2) aus Translations-und Rotationsmitteln (5) gemäss der besagten Kinematik bestehen und einen ersten Antriebsmotor (51) für den besagten Messfühlerträger (2) entlang dieser Schiene (50) und einen zweiten Motor (53) aufweisen, welcher die Drehung um die besagte zweite Achse (Δ_{R}) steuert.

15. System nach Anspruch 13 oder 14, **dadurch gekennzeichnet, dass** die besagten Mittel zur Signalverarbeitung und zur Speicherung (3) ausserdem eine Visualisierungseinheit (Visu) zur Echtzeitkontrolle des Erfassungs- und Digitalisierungverfahrens aufeinanderfolgender Abschnitte (Si) des besagten Objektes (4, 7) aufweisen.

16. System nach irgendeinem der Ansprüche 13 bis 15, **dadurch gekennzeichnet, dass** ein Visier (6) vorgesehen ist , welches aus einer transparenten Wand (60) mit in einer regelmässigen Matrixorganisation angeordneten Eichzielen (600) besteht, und dass dieses Visier (6) mit dem besagten Messfühlerträger (2) einstückig ausgeführt ist, damit es sich zusammen mit ihm bewegen kann.

17. System nach Anspruch 16, **dadurch gekennzeichnet, dass** das besagte Visier (6), um der oberen Oberfläche (400) des besagten Trägers (40) zu folgen, auf Lagern (611, 612) montiert ist.

18. System nach Anspruch 17, **dadurch gekennzeichnet, dass** das besagte Visier (6) an einen, rechtwinklig zum besagten Träger (40) ausgerichteten Bewegungsmessfühler (7) gekoppelt ist.

19. Anwendung des Verfahrens nach irgendeinem der Ansprüche 1 bis 12 auf die Erfassung und Digitalisierung der Form eines menschlichen Fußes (4), um die zur Herstellung von maßgeschneiderten Schuhen erforderlichen Daten zu sammeln.

20. Anwendung des Verfahrens nach irgendeinem der Ansprüche 1 bis 12 auf die kontinuieliche Erfassung und Digitalisierung von Abschnitten einer komprimierbaren Dichtung (7), welche insbesondere dazu bestimmt ist, die Dichtigkeit zwischen einem Karosserieteil (9) und einer Tür (8), welche Kräfte auf die besagte Dichtung (7), wenn sich sie Tür in geschlossener Stellung befindet, zu gewährleisten.

21. Anwendung nach Anspruch 20, **dadurch gekennzeichnet, dass** die besagte Dichtung (7) zwischen einer ebenen lichtundurchlässigen Halterung (10) und einer transparenten Wand (11) angeordnet ist, dass diese lichtundurchlässige ebene Halterung (10) mit einer Translationsbewegung in Richtung zur transparenten Wand (11) versehen ist, um Kompressionskräfte auszuüben , wodurch die besagten auf die Dichtung (7) von der Tür in geschlossener Stellung (8') ausgeübten Kräfte simuliert werden und dass die besagte Erfassung und Digitalisierung der Abschnitte der besagten Dichtung (7) kontinuierlich während ders besagten Translationsbewegung ausgeführt wird.
